# EUROPEAN PATENT APPLICATION

(11) **EP 2 208 518 A2**
(43) Date of publication of application: **21.07.2010**
(21) Application number: 10155390.7
(22) Date of filing: 03.03.2010
(51) Int. Cl.: A63F 13/02

(54) **Gamepad sleeve**

(71) Applicant: Accessories 4 Technology Limited, Bolton, Lancashire BL2 1BX (GB)
(72) Inventor: Stirling, William Waddell, Bolton, Lancashire BL2 1BX (GB)
(74) Representative: Turner, Craig Robert

(57) **Abstract**

A process for making a gamepad or a gamepad sleeve comprises forming a gamepad, or a gamepad sleeve adapted to engage with a gamepad, wherein the gamepad or sleeve comprises, on a user-contacting surface thereof, an elastomeric layer comprising an elastomeric material.

There is also provided a gamepad or gamepad sleeve comprising a suitably shaped substrate or substrate layer and, on a user-contacting surface of the gamepad or sleeve, a layer comprising an elastomeric material.

The gamepad or sleeve is typically formed by injection molding and the elastomeric material preferably comprises a styrenic block copolymer.

## Description

The present invention relates generally to gamepads and to sleeves therefore, particularly but not exclusively to a sleeve adapted for use with a household game machine and to a process for making it. In particular, the invention relates to a gamepad sleeve adapted for use with a PS3 household game machine from Sony.

Since the 1980's, household game machines have gone through the challenging eras of Nintendo's machines (NIN) including N64, Gamecube and Wii, Sony's Play Station (PS) including PS, PS2 and PS3, and Microsoft's XBox. Currently, Microsoft's XBox360, Sony's PS3 and Nintendo's Wii have become three representative series in the household game machine market. Although game machines from these three giants have respective advantages and disadvantages, any of the game machines is equipped with a gamepad to be gripped and manipulated by a user's hands. Unfortunately, gamepads currently available are made of hard materials, so the user tends to feel uncomfortable and sweat in the palms after gripping and manipulating such gamepads for an extended period of time. Sweat may not only affect the operation, but also make the gamepads dirty. Even worse, long-term exposure of the gamepads to the sweat or dust may lead to damage of circuit elements in the gamepads.

Having appreciated the above problems, we have now devised a way of substantially overcoming them. In particular, the present invention provides a sleeve, particularly a gamepad sleeve, that is soft, comfortable to user's hands and provides excellent user feel and grip. It is also substantially sweat-proof. We have also devised a process for making a sleeve with such properties.

In accordance with one aspect of the invention, there is provided a process for making a gamepad, which process comprises forming a gamepad having an elastomeric material disposed on a user-contacting surface thereof.

In another aspect of the invention, there is provided a process for making a gamepad sleeve, which process comprises forming a gamepad sleeve adapted to engage with a gamepad, the sleeve having an elastomeric material disposed on a user-contacting surface thereof.

The elastomeric material is suitably provided as a layer on the gamepad or sleeve. Typically, the layer comprises a formulation or composition containing the elastomeric material, which serves to confer elastomeric properties on the layer.

In another aspect of the invention, there is provided a process for making a gamepad, which process comprises providing a suitably shaped substrate and forming thereon a layer comprising an elastomeric material.

In another aspect of the invention, there is provided a process for a making a gamepad sleeve, which process comprises providing a suitably shaped substrate adapted to engage with a gamepad, and forming thereon a layer comprising an elastomeric material.

In another aspect of the invention, there is provided a process for making a gamepad or a gamepad sleeve, which process comprises forming a gamepad, or a gamepad sleeve adapted to engage with a gamepad, wherein the gamepad or sleeve comprises, on a user-contacting surface thereof, an elastomeric layer comprising an elastomeric material.

The invention also provides a gamepad or gamepad sleeve comprising a suitably shaped substrate or substrate layer and, on a user-contacting surface of the gamepad or sleeve, a layer comprising an elastomeric material.

The elastomeric material or layer is supported by the substrate or substrate layer.

A suitably shaped substrate or substrate layer in the context of the invention means that the substrate or substrate layer is of a size and shape such that it is adapted to provide the basic supporting structure of the gamepad or gamepad sleeve. This will, in part, be determined by the game machine in question. The primary function of the substrate or substrate layer is to support an elastomeric layer which comes into contact with the user.

In the context of the invention the term "gamepad" is to be understood broadly as meaning any type of hand-held control on a game machine, but particularly a control on a household game machine such as a PS3. Similarly, the term "gamepad sleeve" is to be understood broadly as meaning any type of sleeve that is adapted for use with a hand-held control on a game machine, particularly a household game machine. A gamepad sleeve according to the present invention is designed to engage, or fit over, an existing control or gamepad so as to improve the user experience. Its size and shape will therefore be determined accordingly, as will be clear to those in this field.

The present invention is primarily directed towards gamepad sleeves for use in conjunction with gamepads on existing machines, but gamepads themselves can be made if desired, using the processes described. If a gamepad is made, the substrate may, for example, be a suitably shaped solid or hollow block of plastic material, as will be clear to those in the art. An elastomeric layer or coating may then be provided thereon, as further described below.

The elastomeric material or a layer containing it (herein an "elastomeric layer") is suitably provided on the user-contacting surface of the gamepad or gamepad sleeve. Typically the gamepad sleeve will comprise an inner hard substrate layer which is shaped on its inner surface so as to engage with the desired gamepad, the inner substrate layer generally being in the form of a blind-ended sleeve or tube which is open at one end. The elastomeric material is generally provided on the outer surface of the substrate so as to form the outer, or user-contacting surface, of the sleeve. Suitably, the elastomeric material or layer is bonded to the substrate layer, which is typically formed from a hard material such as a plastic. Preferably, substantially all of the user-contacting surface (typically the outer surface) of the gamepad or sleeve comprises the elastomeric material.

In a highly preferred aspect, the elastomeric material, which is suitably a thermoplastic rubber or elastomer, is provided on the gamepad or sleeve by injection molding. Preferably the substrate layer is also formed by injection molding. In a preferred aspect, a substrate layer is formed by injection molding in a first injection step, and then an elastomeric layer is formed on the substrate layer in a second injection step. The elastomeric layer is thus effectively overmolded or coated on to the substrate layer.

In order to provide an elastomeric layer with optimum properties, we have found that it is preferable to control the process, particularly when using injection molding.

Any suitable injection molding equipment may be used, provided that it enables an elastomeric layer to be overmolded on a substrate layer. A double-injection molding technique using a single molding machine may, for example, be used. Injection molding and the techniques associated therewith will be known to those in the art, so will not be further described in detail.

In a preferred aspect, the elastomeric layer is formed by injection molding wherein the temperature of the elastomeric material (or a formulation comprising it) provided to the mold is in the range 40°C to 80°C, preferably from 50°C to 70°C, more preferably from 55°C to 65°C, or 58°C to 62°C. We have found a particularly suitable temperature to be around 60°C, although it will be appreciated the temperature chosen will depend upon the materials being used.

Preferably, during the injection of the elastomeric material, the temperature of the substrate is also carefully controlled. If the temperature is too low, we have found that this can give rise to problems with the elastomer bonding properly to the substrate, particularly when using thermoplastic rubber elastomers in combination with plastic substrates such as polycarbonate. Also, too high a temperature can result in unwanted deformation of the elastomeric layer, and this may also adversely affect its ability to undergo further processing steps. Suitably, the temperature of the substrate is from 20°C to 40°C, or 20°C to 30°C, preferably from 22°C to 35°C, more preferably from 24°C to 30°C, or 26°C to 30°C or 24°C to 27°C. An ideal temperature is, for example, around 26°C or 27°C, although the temperature chosen will depend upon the substrate and elastomer.

The substrate may be formed from any suitable material, provided, in the case of a sleeve, that it can be formed so as to engage with a gamepad. Suitable materials include plastics, of either the themoplastic or thermosetting type. A preferred plastic is polycarbonate. This has good strength and is not easily deformed. Other materials having these properties may be used, as will be clear to the skilled person.

The elastomeric material may be any suitable rubber-like material, although a thermoplastic rubber or elastomer is preferred. Preferably the elastomeric material comprises a styrenic copolymer, particularly of the themoplastic variety. We prefer to use a styrenic block copolymer. Preferred examples include a styrene ethylene butadiene styrene copolymer (SEBS) or a styrene ethylene butylene styrene copolymer or a styrene ethylene propylene styrene copolymer (SEPS). Other products such as polyvinylcloride may be used but are less preferred. We prefer to use materials that have good compatability with polyolefins and mineral oils.

The elastomeric material or layer is suitably provided as a composition comprising one or more elastomers, such as a thermoplastic rubber, together with other suitable ingredients, such as a lubricant. Preferably, the composition comprises from 30% to 50% of the elastomer component, by weight of the composition, although this will depend upon the polymer. Preferably the amount of elastomer is in the range of from 35% to 45% by weight, or 38% to 42% by weight, particularly for a styrenic block copolymer.

Typically, apart from the elastomer, most of the remainder of the composition comprises a lubricant. Any suitable lubricant may be used. Preferably, a liquid lubricant is used. Examples include water, lanolin, a mineral oil, a vegetable oil such as canola, castor, palm, sunflower seed, or rapeseed oil, a tall oil (from animal sources), and a synthetic oil such as a polyalpha olefin (PAO), a synthetic ester, a polyalkylglycol (PAG), a phosphate ester, an alkylated naphthalene, a silicate ester, or an ionic fluid. We prefer to use a mineral oil. The amount of lubricant may vary but is suitably in the range of from about 40% to 70%, or about 50% to 60% by weight of the composition. A preferred range is 53% to 57%, most suitably around 55%.

The composition may further comprise minor amounts other conventional additives or auxiliaries as will be clear to those skilled in the art. A typical additive is a colouring powder.

Preferably the elastomeric layer is bonded to the substrate or substrate layer. That is, a strong adhesion is formed between the two layers. The process of the invention enables this to be achieved.

After injection molding to form the product, the product is preferably cooled. Suitably this cooling is done with the product in the mold. Any suitable cooling system may be used (e.g. water cooling). Typically the product is cooled for 30 to 90 seconds, preferably 40-50 seconds. Typically, the product is cooled to around 36°C to 40°C.

An embodiment of the invention based on injection molding will now be described.

A gamepad sleeve for a PS3 is made by injection molding using the twice injection method. The first injection is of the inner substrate layer (or holder) using polycarbonate (PC) to form up the required shape - as determined by the shape of PS3 gamepads.. Plastic granules of PC are mixed with a black colouring powder and then injected and compressed to form the holder in the desired shape. The PC holder is then placed on the other tooling for the second injection using a thermoplastic rubber (TPR) material, for example SEBS.

Typically, the thermoplastic rubber is used in the form of cylindrical granules (e.g. 3mm by 1.5mm diameter) but any suitable form may be used. Preferably the thermoplastic rubber is mixed with a suitable lubricant, and with colouring - for example, a black colour powder. One suitable formulation comprises (by % weight) 40% SEBS, and about 55% lubricant such as mineral oil, with the remainder being auxiliaries (such as colour) and other additives.

The TPR formulation comprising the thermoplastic rubber and lubricant and other auxiliaries is fed to the injection molding machine where it is mixed thoroughly and heated to around 60°C. Preferably, the formulation is mixed so as to give a low degree of softness in the final product as measured on the appropriate Shore Hardness scale for soft thermoplastic elastomers (Scale A). Levels of below 20 degrees are preferred. More preferably, the softness level is about 5 degrees or about 7 to 8 degrees.

The TPR (elastomeric) composition is then injected into the mold at around 60°C. The mold comprises the PC substrate at a temperature of around 26°C or 27°C. The TPR composition thus coats the substrate in the mold. Typically the coating step takes about 18 seconds. The coated substrate is then cooled down by means of a water pipe cooling system for about 40 to 50 seconds e.g. 45 seconds. Once the temperature has been reduced to around 37°C (typically 36°C to 40°C), the product is removed from the mold.

Once the product has been removed from the mold, it is left to cool down - typically for about 3 minutes, and is then packed into a PU polybag.

The elastomeric layer and/or the substrate or substrate layer may have an uneven or undulating surface.

The invention enables an elastomeric material to be applied to an uneven surface cavity (i.e. the substrate) in a single process, thus creating a mixture of layers, and providing a product with excellent "feel".

The thermoplastic rubber or material used, for example SEBS, for the second injection typically has the following characteristics:
a) Transparency.
b) Cylindrically shaped fine granules of 3mm x 1.5mm diameter.
c) Ignition point at about 400 C
   If the temperature of the process is not controlled correctly, we have found that the following problems can occur:
   Water drops can appear on the second injection mold.

The final injection product will have water drops on the TPR surface.

These problems can lead to defective products, and so are best avoided.

We have found that the softness of the elastomeric material or formulation (such as a TPR formulation) is an important consideration in obtaining good results in terms of the user experience, and soft or low rigidity products are preferred. This property can be determined using the Shore Hardness scale for soft thermoplastic elastomers (Scale A), as will be clear to those skilled in the art. Preferably, the softness of the layer comprising the elastomeric material in the final product is below 20 degrees, more preferably in the range of from about 3 to 15 degrees, as defined by test method ASTM D2240. A particularly preferred softness is from about 7 to 8 degrees or about 5 degrees. The softness level can be controlled by varying the type of TPR used as well as the temperature during processing, as will be clear to those in the art. We prefer to use a low softness because we have found this increases the "stickiness" of the elastomeric layer, which improves performance.

Suitably, the TPR material is very soft, and so does not necessarily require the pressure of the molding injection in order to form. We have found that it is easy to deform the soft elastomer on the injection disengage point, so care is needed during the injection process.

Typical physical characteristics of a preferred TPR formulation are given in Table 1 below.

**Table 1**

| Test Item / (Unit) | Test Method | Result | Remarks |
|---|---|---|---|
| 1. Softness.A. | ASTM D2240 | 5 - 8 degrees | |
| 2. Specific gravity.g/cm3. | ASTM D792 | 0.88 | |
| 3. Elastic Strength (kg/cm2) | ASTM D412 | 13.6 | |
| 4. Tearing Strength.kn/m. | ASTM D624 | 8.5 | |
| 5. Breaking Extended rate.%. | ASTM D412 | 850 | |
| 6. Melt Flow Rate (g/10 min) | ASTM D1238 | 96.5 | |

The inner holder material formed from PC (polycarbonate), has good strength and is not easily deformed.

In a preferred aspect, the elastomeric layer of the gamepad sleeve varies in thickness, and the process described herein allows this to be achieved. For example, an undulating layer may be provided so as to provide finger grip(s) on one or more surfaces of the sleeve. This can increase comfort while game playing. We have managed to create undulations, whilst still providing excellent feel and softness in the elastomeric layer.

The present invention provides, in particular, a gamepad sleeve having superior wear resistance, dust-proof properties and the ability to protect gamepads.

As shown in the Figures, a preferred gamepad sleeve comprises an upper bottom surface, a lower bottom surface, a left side surface and a right side surface, wherein the upper bottom surface, the lower bottom surface, the left side surface and the right side surface are contiguous to each other to form a receiving chamber, and the receiving chamber is of a shape and a size matching those of the gamepad so that when put on the gamepad, the gamepad sleeve fits the gamepad well.

The gamepad sleeve preferably further comprises a top surface, wherein the top surface, together with the upper bottom surface, the lower bottom surface, the left side surface and the right side surface, form a receiving chamber having only one sleeve opening.

The upper bottom surface preferably is a smooth curved surface.

The lower bottom surface is preferably provided with at least one finger groove, although ideally the number of the said finger grooves is at least two.

The lower bottom surface typically extends towards the outside of the sleeve opening to form a structure larger than the upper bottom surface.

On an inner wall of the lower bottom surface, a positioning stud for engaging with a positioning hole of a game machine is preferably disposed near the sleeve opening.

Preferably the upper bottom surface joins with the top surface to form a continuous and smooth curved surface.

The gamepad sleeve preferably further comprises a button sleeve matching a button of the game machine.

The lower bottom surface of the gamepad sleeve typically extends towards the outside of the sleeve opening to form a structure larger than the upper bottom surface, which is complementary to the gamepad commonly used at present, so the gamepad sleeve can be attached on the gamepad securely. Further, on an inner wall of the lower bottom surface of the gamepad sleeve, a positioning stud for engaging with a positioning hole of the game machine is disposed near the sleeve opening in order for the gamepad sleeve to be attached more securely without slipping away from the gamepad when a player operates the gamepad with a great force. Additionally, the gamepad sleeve further comprises a button sleeve for accommodating buttons of the game machine, thereby to well protect other parts than the gamepad.

### BRIEF DESCRIPTION OF THE SEVERAL VIEWS OF THE DRAWINGS

Fig. 1 is a schematic perspective view of a gamepad sleeve according to the present invention.
Fig. 2 is a schematic perspective view of Fig. 1 from another viewing angle;
Fig. 3 is a schematic perspective view of Fig. 1 from another viewing angle;
Fig. 4 is a schematic perspective view of Fig. 1 from another viewing angle;
Fig. 5 is a schematic perspective view of a second embodiment of the present invention.
Fig. 6 is a schematic perspective view of Fig. 5 from another viewing angle;
Fig. 7 is a schematic perspective view of Fig. 5 from another viewing angle;
Fig. 8 is a schematic perspective view of Fig. 5 from another viewing angle;
Fig. 9 is a schematic front view of the gamepad sleeve of the present invention when disposed on a gamepad during use;
Fig. 10 is a schematic back view of the gamepad sleeve of the present invention when disposed on a gamepad during use;
Fig. 11 is a schematic perspective view of a third embodiment of the present invention
and
Fig. 12 is a schematic perspective view of Fig. 11 from another viewing angle.

Hereinafter, the present invention will be described in more details with reference to the attached drawings.

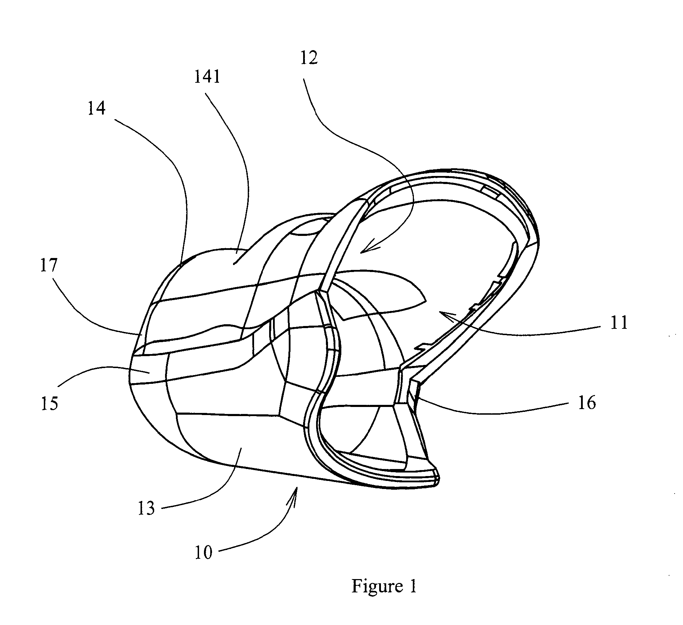

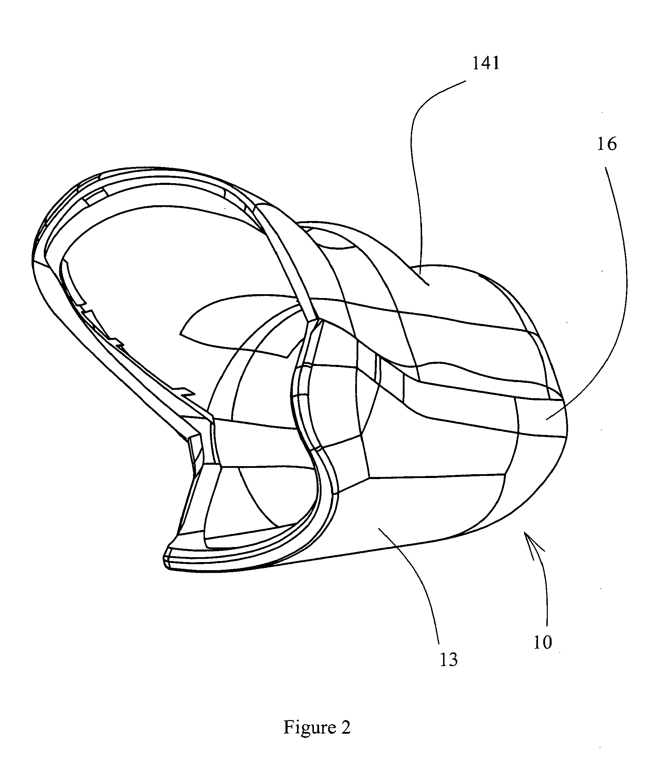

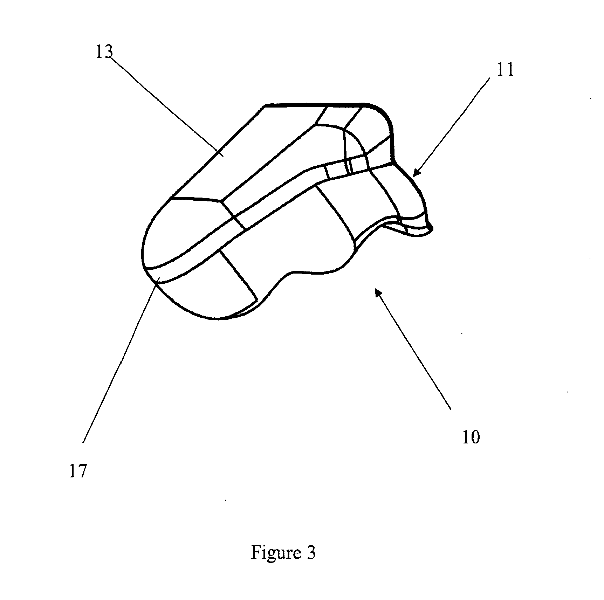

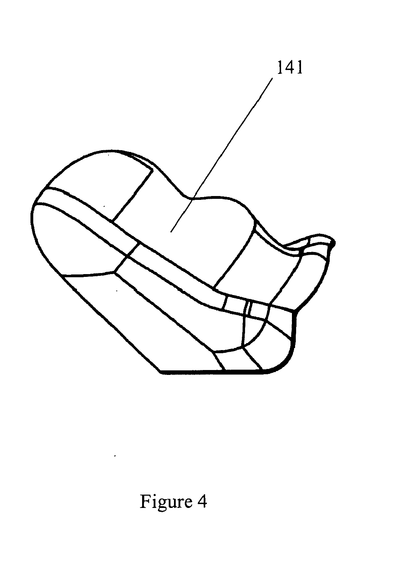

Referring to Figs. 1 to 4, a gamepad sleeve 10 is disclosed in the present invention. The gamepad sleeve 10 is made of polycarbonate coated with a SEBS-based elastomeric material. The gamepad sleeve 10 comprises a sleeve opening 11, and a receiving chamber 12 for receiving a gamepad extends from the sleeve opening 11 towards the interior of the sleeve. The receiving chamber 12 is of a shape and a size matching those of the gamepad, and when being put on the gamepad, the gamepad sleeve 10 fits the gamepad well. In this embodiment, taking a gamepad sleeve that matches Sony's PS3 (Play Station 3) game machines as an example, the gamepad sleeve comprises an upper bottom surface 13, a lower bottom surface 14, a left side surface 15, a right side surface 16 and a top surface 17. The upper bottom surface 13, the lower bottom surface 14, the left side surface 15, the right side surface 16 and the top surface 17 are contiguous to each other to form the receiving chamber 12. The gamepad sleeve 10 has a smooth and round outer surface to give the user who grips the sleeve a very comfortable feeling. The lower bottom surface 14 extends towards the outside of the sleeve opening 11 to form a structure that is larger than the upper bottom surface, and the opening of the receiving chamber expands towards the outside in such a way that the overall receiving chamber is smaller at the top but slightly larger at the opening. This is intended to fit well with the gamepad and join with the gamepad securely. When used with any different gamepads, the gamepad sleeve of the present invention shall fit well with the gamepads. In this embodiment, the gamepad sleeve 10 is made of a soft elastomeric material, so it makes the user's hand feel comfortable and avoids perspiration. To further make the user feel more comfortable, two finger grooves 141 are disposed on the lower bottom surface 14 so that, when the gamepad sleeve 10 is gripped by the user's hand, some of the user's fingers may be placed in the finger grooves 141, thereby making the user's hand feel comfortable and preventing slippage of the fingers that are gripping the gamepad. Besides, the upper bottom surface 13 of the gamepad sleeve joins with the top surface 17 to form a continuous and smooth curve, resulting in an aesthetic curved profile of the gamepad sleeve.

Obviously, the gamepad sleeve 10 of the present invention may also be designed to comprise only the upper bottom surface 13, the lower bottom surface14, the left side surface 15 and the right side surface 16 which jointly form the receiving chamber 12, with the top surface being eliminated, thus forming a structure having a through-hole.

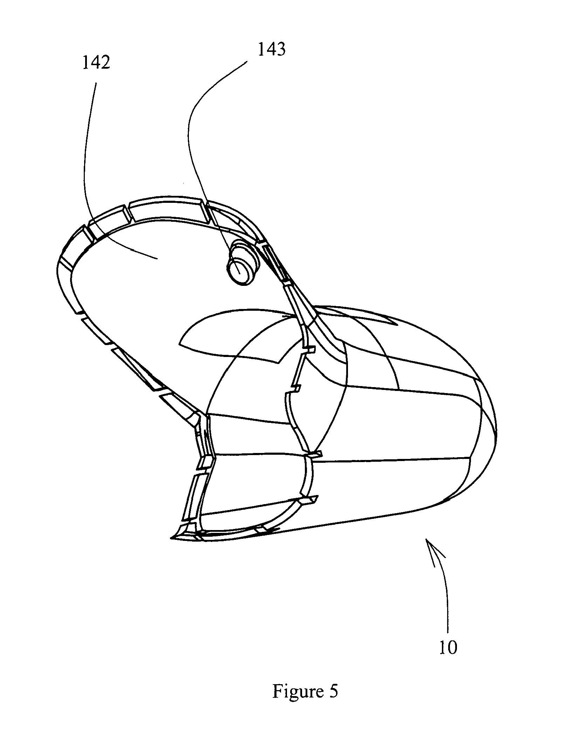

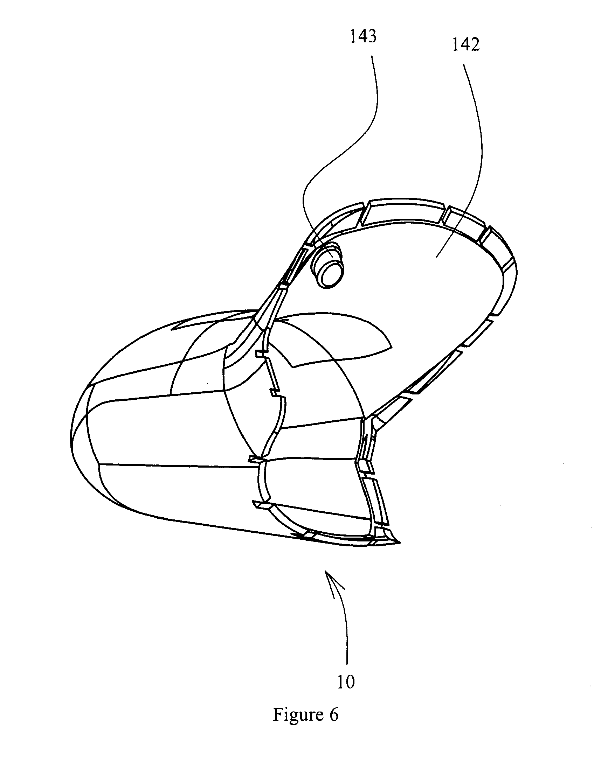

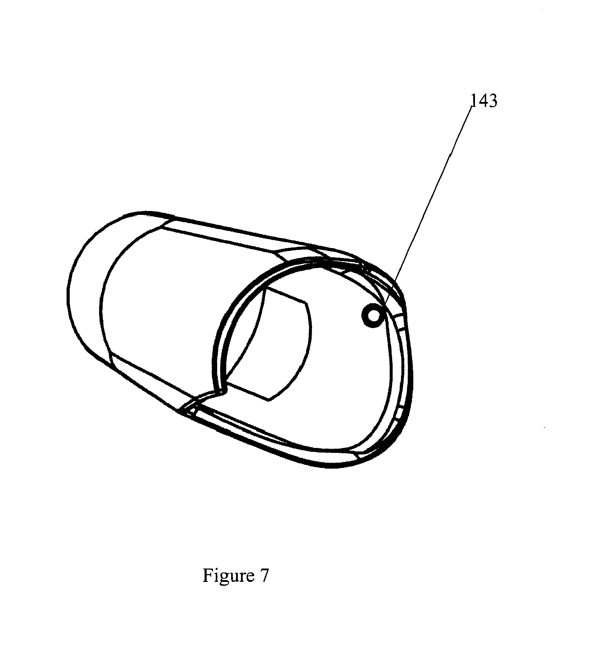

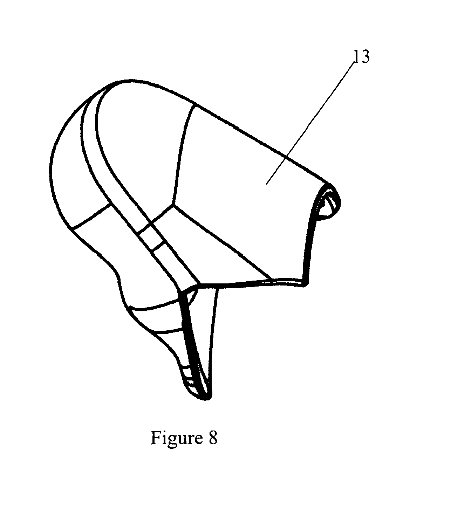

Referring to Figs. 5 to 8, another embodiment of the present invention is shown therein. This embodiment is generally the same in structure as the embodiment shown in Figs. 1 to 4 except that, on an inner wall 142 of the lower bottom surface 14, a positioning stud 143 for engaging with a positioning hole of a game machine is disposed near the sleeve opening 11. The positioning stud 143 can be snapped into the positioning hole of the game machine in a very convenient way to fix the gamepad sleeve 10 onto the game machine.

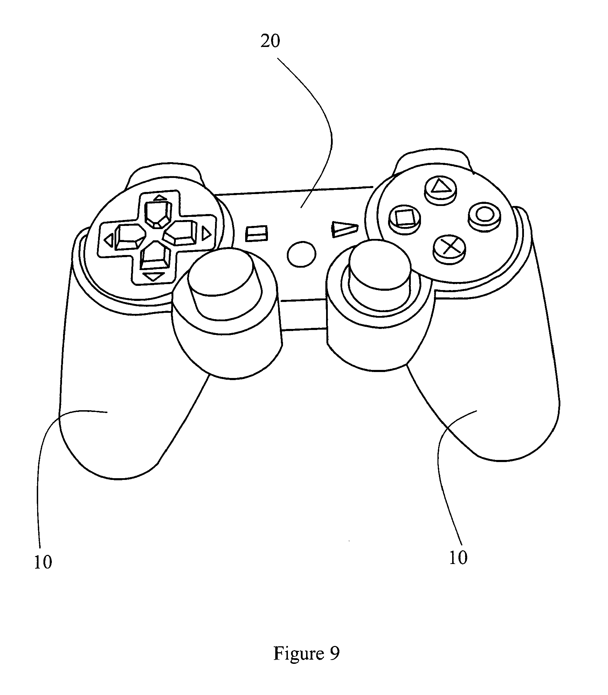

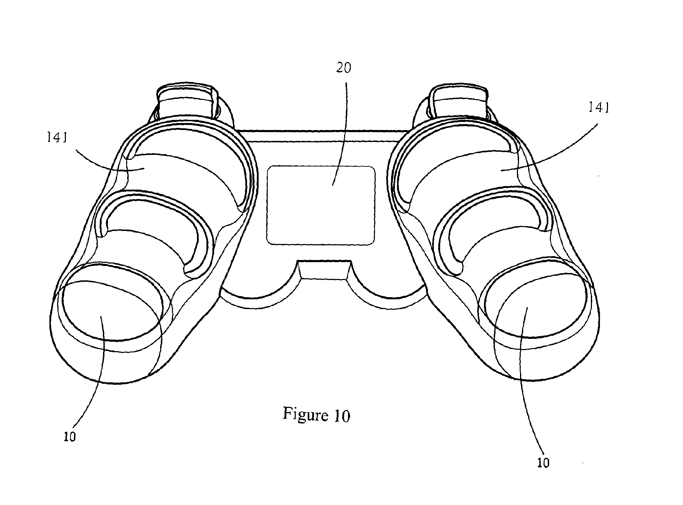

Referring to Figs. 9 and 10, a schematic front view and a schematic back view of the gamepad sleeve of the present invention during use are shown therein respectively. As shown therein, two gamepads of a game machine 20 are provided with a gamepad sleeve of the present invention respectively. The gamepad sleeves 10, which join with the gamepads securely, are smooth on the respective front surface and provided with two finger grooves 141 on the respective back surface. Obviously, more than two finger grooves 141 may be provided as well.

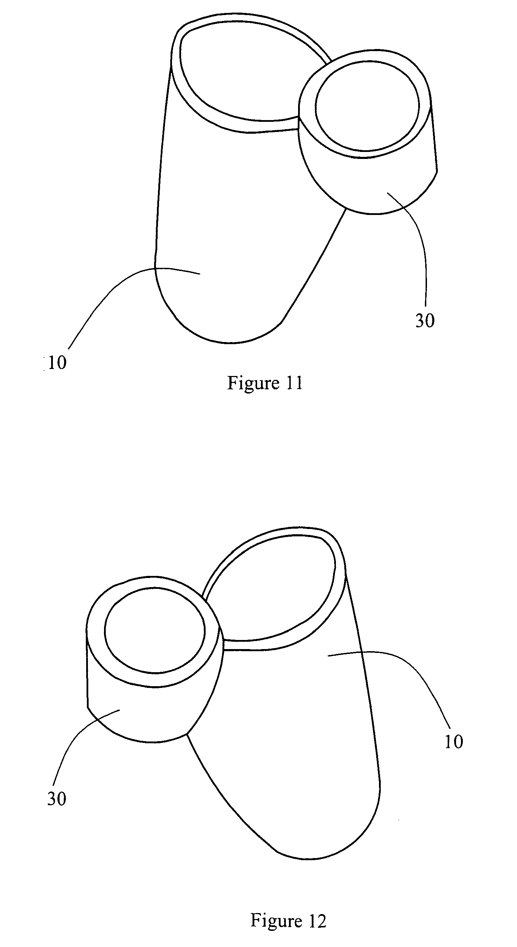

Referring to Figs. 11 and 12, schematic perspective views of a third embodiment of the present invention are shown therein. This embodiment is generally the same in structure as the above two embodiments except that, this gamepad sleeve 10 further comprises a button sleeve 30. Although only a single button sleeve 30 is shown herein, the gamepad sleeve 10 of the present invention may also be designed to comprise a plurality of button sleeves 30 in practice so that besides the gamepad, other buttons and corresponding parts of the game machine may also be protected.

## Claims

1. A process for making a gamepad or a gamepad sleeve, which process comprises forming a gamepad, or a gamepad sleeve adapted to engage with a gamepad, wherein the gamepad or sleeve comprises, on a user-contacting surface thereof, an elastomeric layer comprising an elastomeric material.

2. A process according to claim 1 wherein the process comprises forming a suitably shaped substrate or substrate layer for the gamepad or sleeve, and forming the elastomeric layer on said substrate or substrate layer.

3. A process according to claim 1 or 2 wherein the elastomeric layer and/or the substrate or substrate layer is formed by injection molding.

4. A process according to claim 2 or 3 wherein the substrate or substrate layer comprises a plastic.

5. A process according to claim 4 wherein the plastic comprises polycarbonate.

6. A process according to any preceding claim wherein the elastomeric material comprises a thermoplastic styrenic block copolymer.

7. A process according to claim 7 wherein the styrenic block copolymer comprises one or more of a styrene ethylene butadiene styrene copolymer (SEBS); a styrene ethylene butylene styrene copolymer; or a styrene ethylene propylene styrene copolymer (SEPS).

8. A process according to any preceding claim wherein the elastomeric layer further comprises a lubricant.

9. A process according to claim 8 wherein the elastomeric layer comprises by %wt of the layer from 38% to 42% of elastomeric material and from 53% to 57% of lubricant.

10. A process according to any one of claims 3 to 9 wherein during injection molding, an elastomeric composition comprising the elastomeric material is provided to the mold at a temperature of from 55°C to 65 °C.

11. A process according to any one of claims 3 to 10 wherein during injection molding the temperature of the substrate or substrate layer is from 24°C to 30°C.

12. A process according to any preceding claim wherein the Shore Hardness of the elastomeric layer is from 3 to 15 degrees.

13. A gamepad or gamepad sleeve comprising a suitably shaped substrate or substrate layer and, on a user-contacting surface of the gamepad or sleeve, a layer comprising an elastomeric material.

14. A gamepad or gamepad sleeve according to claim 13 wherein the gamepad or sleeve is as defined in any one or more of claims 4 to 9 and claim 12.

15. A gamepad or gamepad sleeve according to claim 13 or 14 wherein the substrate layer comprises a polycarbonate, and the elastomeric layer comprises a thermoplastic styrenic block copolymer, suitably one or more of a styrene ethylene butadiene styrene copolymer (SEBS); a styrene ethylene butylene styrene copolymer; or a styrene ethylene propylene styrene copolymer (SEPS).
